# EUROPEAN PATENT SPECIFICATION

(11) **EP 3 164 970 B1**
(45) Date of publication and mention of the grant of the patent: **06.06.2018**
(21) Application number: 15744671.7
(22) Date of filing: 25.06.2015
(51) Int. Cl.: H04L 12/801, H04L 12/747, H04L 12/715

(54) **A METHOD AND SYSTEM FOR COMPRESSING FORWARD STATE OF A DATA NETWORK**
VERFAHREN UND SYSTEM ZUM KOMPRIMIEREN DES VORWÄRTS-ZUSTANDS EINES DATENNETZWERKS
PROCÉDÉ ET SYSTÈME DE COMPRESSION DE L'ÉTAT VERS L'AVANT D'UN RÉSEAU DE DONNÉES

(30) Priority: 02.07.2014 US 201414322763
(43) Date of publication of application: 10.05.2017
(73) Proprietor: Telefonaktiebolaget LM Ericsson (publ), 164 83 Stockholm (SE)
(72) Inventor: ZHANG, Ying, Fremont, California 94555 (US)
(74) Representative: Brann AB
(86) International application number: PCT/IB2015/054753
(87) International publication number: WO 2016/001799

(56) References cited:
- US-A1- 2013 163 426
- US-A1- 2013 218 853
- SINGH S ET AL: "PACKET CLASSIFICATION USING MULTIDIMENSIONAL CUTTING", COMPUTER COMMUNICATION REVIEW, ACM, NEW YORK, NY, US, vol. 33, no. 4, 31 October 2003 (2003-10-31), pages 213-224, XP001224082, ISSN: 0146-4833
- ORI ROTTENSTREICH ET AL: "Compressing forwarding tables", INFOCOM, 2013 PROCEEDINGS IEEE, IEEE, 14 April 2013 (2013-04-14), pages 1231-1239, XP032440874, DOI: 10.1109/INFCOM.2013.6566915 ISBN: 978-1-4673-5944-3

## Description

### FIELD OF INVENTION

The embodiments of the invention are related to the field of networking. More specifically, the embodiments of the invention relate to a method and system for managing forward state of a data network.

### BACKGROUND

An inherent characteristic of Software-defined Networks (SDN) is the physical separation of control and data plane entities. In this model, applications (or network services) running on top of a SDN controller manage network wide policies and instruct the controller to either proactively or reactively install forwarding entries in switches (also referred to as forwarding elements, or data plane elements, and these terms are used interchangeably within the specification). The collection of forwarding entries in all switches form the forwarding state of the network. The controller serves as a network operating system that controls and manages these programmable switches and provide a programmatic interface to the higher-level network management and control applications. While most existing controllers maintain network topology and high level policy information, they generally do not keep a copy of the actual flow entries installed in all switches.

The absence of the copy of flow entries may be due to the sheer size of flow entries within an operating network. Each switch may contain hundreds of thousands flow entries, and keeping the aggregation of them in a SDN controller, even though desirable in many scenarios, may not be practical. Thus, it is a challenge to store the forwarding state of a network in a central locale (such as a SDN controller) in memory efficiently.

US 2013/163426 A1 describes a network device acting as a forwarding element within a software-defined network, which receives a representation of configurable flow table definitions and configurable logic for selecting between flow tables.

### SUMMARY

A method implemented in a network device of a software-defined network (SDN) system for compressing network state of the SDN system is disclosed. The SDN system contains network elements serving as forwarding elements to forward traffic, wherein the network device manages traffic forwarding between the network elements, and wherein the network elements contain flow tables for the traffic forwarding. The method comprises combining flow tables for a set of the network elements into a combined table, wherein each row within the combined table is keyed off a common field of each flow table. The method continues with selecting a set of columns of the combined table for compression, wherein the selection is based at least partially on topology of the set of the network elements within the network, and compressing the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity with the predicting subset and a corresponding CaRT are used to restore the entity within the predicted subset.

A network device for compressing network state of a SDN system is disclosed. The network device is coupled to the SDN system, and the SDN system contains network elements serving as forwarding elements to forward traffic, wherein the network device manages traffic forwarding between the network elements, and wherein the network elements contains flow tables for the traffic forwarding. The network device contains a processor and non-transitory machine-readable storage medium containing instructions which when executed by the processor cause the processor to combine flow tables for a set of the network elements into a combined table, wherein each row within the combined table is keyed off a common field of each flow table. The processor is further to select a set of columns of the combined table for compression, wherein the selection is based at least partially on topology of the set of the network elements within the network. In one embodiment, the selection is with some degree of randomization. The processor is further to compress the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity with the predicting subset and a corresponding CaRT are used to restore the entity within the predicted subset.

A non-transitory machine-readable storage medium having instructions stored therein for compressing network state of a SDN system is disclosed. The non-transitory machine-readable storage medium, when executed by a processor, causes the processor to perform operations implemented at a network device of the SDN system. The SDN system contains network elements serving as forwarding elements to forward traffic, wherein the network device manages traffic forwarding between the network elements, and wherein the network elements contains flow tables for the traffic forwarding. The operations comprise combining flow tables for a set of the network elements into a combined table, wherein each row within the combined table is keyed off a common field of each flow table. The operations further comprise selecting a set of columns of the combined table for compression, wherein the selection is based at least partially on topology of the set of the network elements within the network, and compressing the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity within the predicting subset and a corresponding CaRT are used to restore the entity within the predicted subset.

Embodiments of the invention utilize algorithms to compress flow table entries of a data network thus make storing these flow table entries more efficiently in a central locale.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this specification are not necessarily to the same embodiment, and such references mean at least one. Further, when a particular feature, structure, or characteristic is described in connection with an embodiment, it is submitted that it is within the knowledge of one skilled in the art to affect such feature, structure, or characteristic in connection with other embodiments whether or not explicitly described.
**Figure 1** is a block diagram illustrating a network of switches.
**Figure 2** illustrates operations of a flow entry compression module according to one embodiment of the invention.
**Figure 3** illustrates examples of predicting one table column through another table column according to one embodiment of the invention.
**Figure 4** illustrates examples of predicting one table column with wildcards and multiple tables according to one embodiment of the invention.
**Figure 5** is a pseudo code procedure illustrating the selection of the predicting set and the predicted set according to one embodiment of the invention.
**Figure 6** is a flow diagram illustrating a method for compressing forwarding state according to one embodiment of the invention.
**Figure 7** is a flow diagram illustrating a method of selection of columns of a combined flow table according to one embodiment of the invention.
**Figure 8** is a flow diagram illustrating a method of compression of selected columns of a combined flow table according to one embodiment of the invention.
**Figure 9A** illustrates connectivity between network devices (NDs) within an exemplary network, as well as three exemplary implementations of the NDs, according to some embodiments of the invention.
**Figure 9B** illustrates an exemplary way to implement the special-purpose network device 902 according to some embodiments of the invention.
**Figure 9C** illustrates various exemplary ways in which virtual network elements (VNEs) may be coupled according to some embodiments of the invention.
**Figure 9D** illustrates a network with a single network element (NE) on each of the NDs of Figure 9A, and within this straight forward approach contrasts a traditional distributed approach (commonly used by traditional routers) with a centralized approach for maintaining reachability and forwarding information (also called network control), according to some embodiments of the invention.
**Figure 9E** illustrates the simple case of where each of the NDs 900A-H implements a single NE 970A-H (see Figure 9D), but the centralized control plane 976 has abstracted multiple of the NEs in different NDs (the NEs 970A-C and G-H) into (to represent) a single NE 9701 in one of the virtual network(s) 992 of Figure 9D, according to some embodiments of the invention.
**Figure 9F** illustrates a case where multiple VNEs (VNE 970A.1 and VNE 970H. 1) are implemented on different NDs (ND 900A and ND 900H) and are coupled to each other, and where the centralized control plane 976 has abstracted these multiple VNEs such that they appear as a single VNE 970T within one of the virtual networks 992 of Figure 9D, according to some embodiments of the invention.
**Figure 10** illustrates a general purpose control plane device 1004 including hardware 1040 comprising a set of one or more processor(s) 1042 (which are often Commercial off-the-shelf (COTS) processors) and network interface controller(s) 1044 (NICs; also known as network interface cards) (which include physical NIs 1046), as well as non-transitory machine readable storage media 1048 having stored therein centralized control plane (CCP) software 1050), according to some embodiments of the invention.

### DETAILED DESCRIPTION

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. However, it is understood that embodiments of the invention may be practiced without these specific details. In other instances, well-known circuits, structures and techniques have not been shown in detail in order not to obscure the understanding of this description. It will be appreciated, however, by one skilled in the art that the invention may be practiced without such specific details. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other. A "set," as used herein refers to any positive whole number of items including one item.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices. One or more parts of an embodiment of the invention may be implemented using different combinations of software, firmware, and/or hardware.

The operations in the flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

### The Need of Storing Forwarding States In A Central Locale & Existing Solutions

While most existing SDN controllers (or simply controllers) do not keep a copy of flow entries installed in SDN switches (or simply switches) managed by the controllers, storing the flow entries thus maintaining the forwarding states of the switches can be essential in real-world deployment scenarios, particularly in the following use cases.

Fast fault recovery: Network infrastructures are required to recover (i.e., restore to its intended operational state) from interruptions such as switch failures, control channel issues etc. In such scenarios it is important to minimize the network downtime. Maintaining the forwarding state (or roll-back recovery state) of the switches in a managing controller ensures faster recovery as it avoids the need to re-compute associated network states, which often consists of thousands or even hundreds of thousands of flow entries.

Network state queries: Multiple control applications often query *the same set of* flow entries independently for different use cases. This could introduce significant overhead in the communication channel between the controller and switches, or even overload the switches' processing power. Maintaining the flow entries in the controller eliminates the need for redundant query messages.

Consistency check: The physical separation of control and data planes between the controller and switches may introduce state inconsistency between these entities. A flow may not always be correctly installed as instructed by the controller due to a variety of reasons (e.g., conflicting flows, table overflow, timeouts, flow updates without notification, or switch bugs). In these scenarios, there is a mismatch between the actual switch state and the intended control plane state. Without storing at least the intended states in the controller, it is hard to detect and resolve such inconsistencies.

Rule space analysis: When independent applications install flow entries simultaneously, the controller needs to analyze the new requests as well as the existing entries to detect conflicts or to combine or cache entries for optimizing memory (e.g., ternary content-addressable memory, TCAM) usage. The analysis and combination needs a copy of the forwarding state of the switches in the controller.

Note storing the forwarding state in a disk accessible to the controller may not be sufficient, even though disk may have sufficient storage space. As discussed herein above, when real-time lookup of the forwarding state is required, accessing the disk is not often not quic enough, thus unless indicated otherwise, the forwarding state is stored in memory accessible by the controller in this specification. An intuitive approach of maintaining the forwarding state in the controller is to keep a copy of the flow tables of every switch in the controller's memory, the same form as it is in the switch. However, it requires significant amount of memory thus introducing scalability challenges. For instance, consider a network with 1K switches and that each switch supports OpenFlow 1.3 and handles 300K entries (the size of a default-free routing table). To handle this scale, the controller requires a total of 30GB of memory to store the flow table information of all switches (assuming each flow entry including its match fields, instructions, and flow attributes requires 100 bytes). In the data center scenario where each server runs a virtual switch, the number of switches can be 100K. With 10K flows per switch, the total size is 100G. Maintaining the flow tables in disks may work for applications like fault recovery. However, for most applications like rule space analysis, consistency checks, where real-time lookup on the entries is required and when the overall flow processing time should be optimized, the I/O overhead in querying from disks introduces performance implications that makes the approach undesirable.

Embodiments of the invention seek ways to reduce the in-memory storage without compromising the overall performance. In order to achieve the goal, embodiments of the invention explore the correlation among switch flow tables and identify the feasibility of designing a lossless compression method to reduce redundancy. In addition, embodiments of the invention propose compression techniques to convert a network state into a compressed table and set of prediction model. Note that while the examples given assumes that the network state containing switch flow tables is stored in a SDN controller, embodiment of the invention are not so limited and the central locale may not be the SDN controller. For example, the network state may be stored in a database coupled to the SDN controller. Indeed, embodiment of the invention may be applied to a data network not managed by a SDN controller, as the compression techniques for flow tables of embodiments of the invention may apply to other type of data networks, such as one utilizing network function virtualization (NFV), which are discussed in more details herein.

### Correlation Among Switch Flow Tables and Exploration

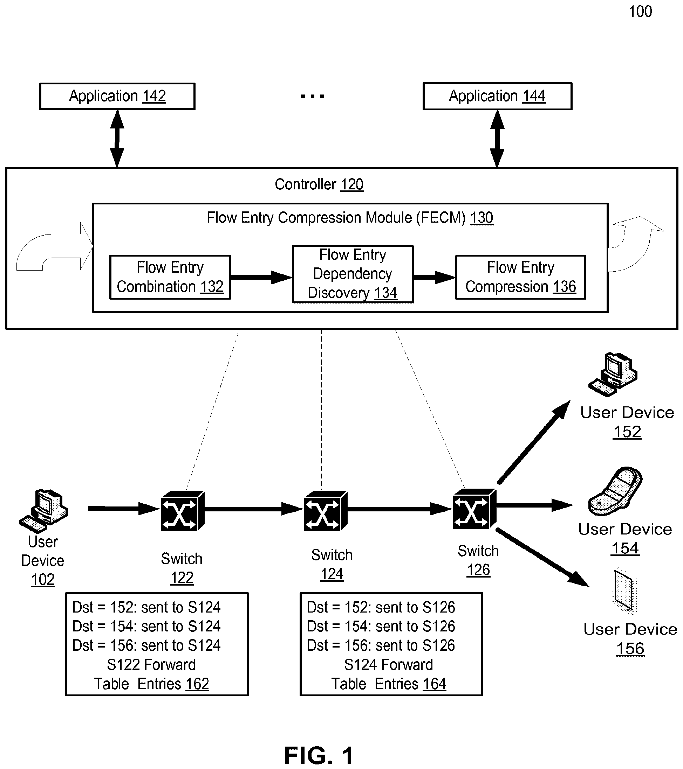

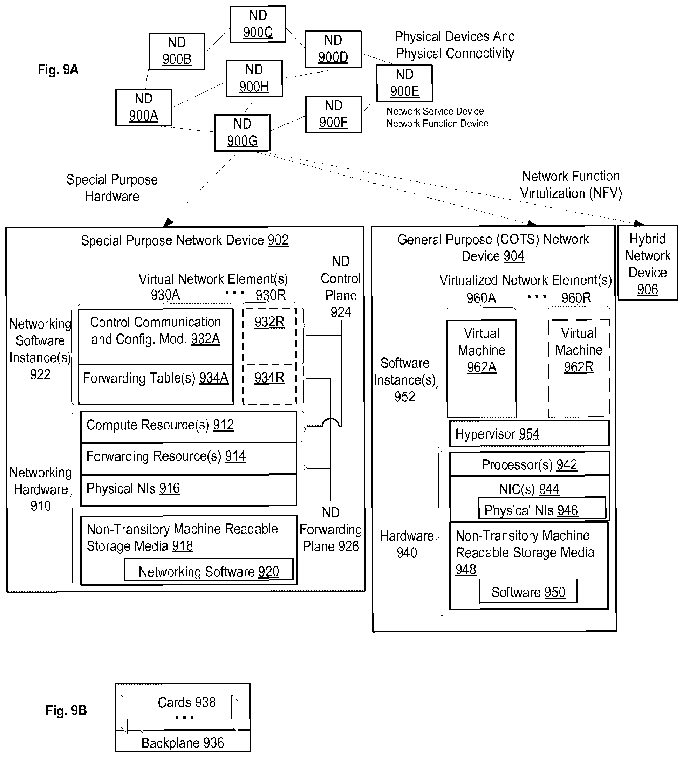

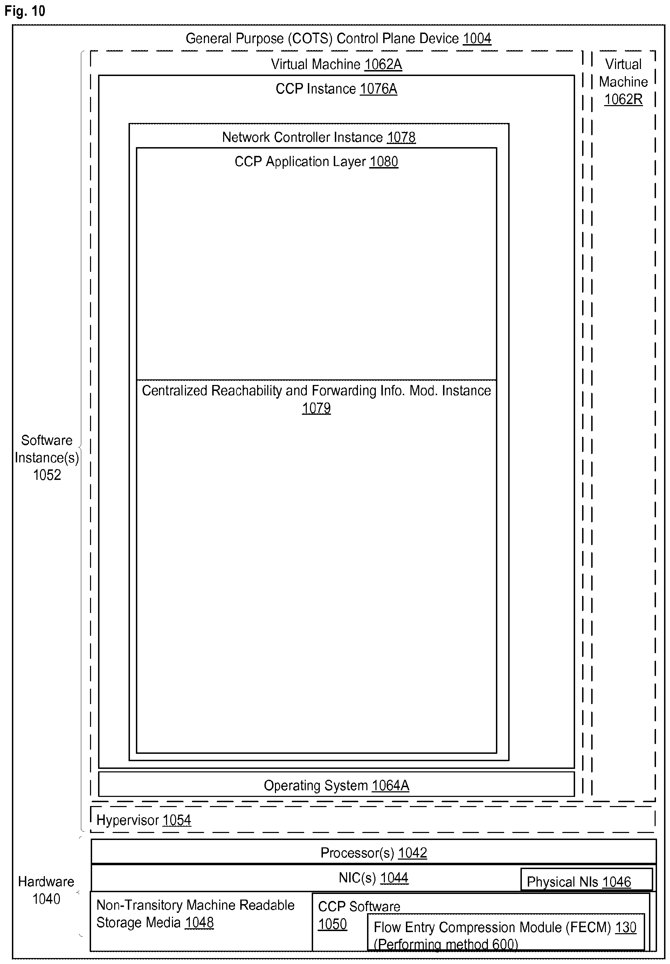

Given the scalability challenge of maintaining the forwarding state in a SDN controller, it is important to explore whether or not there is correlation among switch flow tables distributed in various switches in a SDN network. **Figure 1** is a block diagram illustrating a network of switches. Network 100 contains controller 120 and switches 122-126. Applications 142 and 144 interacts with controller 120, which in turn manages switches 122-126. The details of interactions among applications, controllers, and switches are discussed herein below in relating to **Figures 9A-F** **and** **10****.**

Referring to **Figure 1****,** a traffic flow comes from user device 102, and the traffic flow goes to user devices 152-156. User devices (sometimes referred to as end user devices) include workstations, laptops, netbooks, tablets, palm tops, mobile phones, smartphones, multimedia phones, Voice Over Internet Protocol (VOIP) phones, terminals, portable media players, GPS units, wearable devices, gaming systems, set-top boxes, Internet enabled household appliances). Each switch of network 100 maintains a flow table, and each flow table contains table entries. The table entries relating to the flow at switches 122 and 124 are illustrated in **Figure 1****.**

At switch 122, flow table entries 162 contain an entry indicating that when a packet containing a match field of destination address of user device 152, the action for such packet is to send to switch 124, as it is closer to the user device. In addition, flow table entries 162 contain entries indicating that when a packet containing a match field of destination address of user devices 154 and 156, the action for such packet is also to send to switch 124. Similarly, flow table 164 contains entries indicating that when a packet containing a match field of destination address of one of user devices 152-156, the action for such packet is to send to switch 126.

Although the actual actions of switches 122 and 124 are different, they have strong correlation among them: Switch 122's action is to forward to switch 124, and switch 124's action is to forward to switch 126. Thus, if the forward table entries are to be stored in aggregation, the correlated forward table entries may be compressed to reduce redundancy among the forward table entries.

In one embodiment, controller 120 contains a flow entry compression module (FECM) 130. FECM 130 takes flow tables from switches of network 100 and compress the flow tables and stored the compressed entries somewhere in memory coupled to controller 120. When one of applications 142-144 requests a forwarding state of a switch, the corresponding compressed entries are decompressed by FECM 130 or another mirroring decompression module and the restored flow table of the switch is sent to the application. Similarly, a switch may request the forwarding state of the switch from controller 120 (e.g., for fast fault recovery), and restored flow table of the switch is sent to the switch.

In one embodiment, FECM 130 contains three components: flow entry combination 132, flow entry dependency discovery 134, and flow entry compression 136. The three components each perform a distinct function, although they may be implemented in one or more integrated entity in some embodiments.

Flow entry combination 132 may be configured to combine flow tables of multiple switches into a joint table. The combination may not be for all the switches within a network, and a SDN controller may select only a subset of the switches for the combination (thus the candidates for compression). Flow entry dependency discovery 134 identifies the predictive correlations among entities of flow tables from the selected switches. Flow entry compression 136 compresses the flow entries by utilizing the discovered dependency among entities of the flow tables.

Note for controller 120 to work properly, the compressed flow entries need to be restored prior to sending north bound to an application or south bound to a switch, thus a decompression module is needed. In one embodiment, FECM 130 contains the decompression components (not shown). For example, FECM 130 may contain a flow entry decompression component to restore a requested flow entry based on an identified predictive correlation with one or more other flow entries, and the restored flow entry may then be extracted from FECM 130. The decompression components may also be implemented outside of FECM 130 but coupled to controller 120. Since the decompression operations are the exact opposite of the compression of FECM 130, the operations of decompression are not detailed herein.

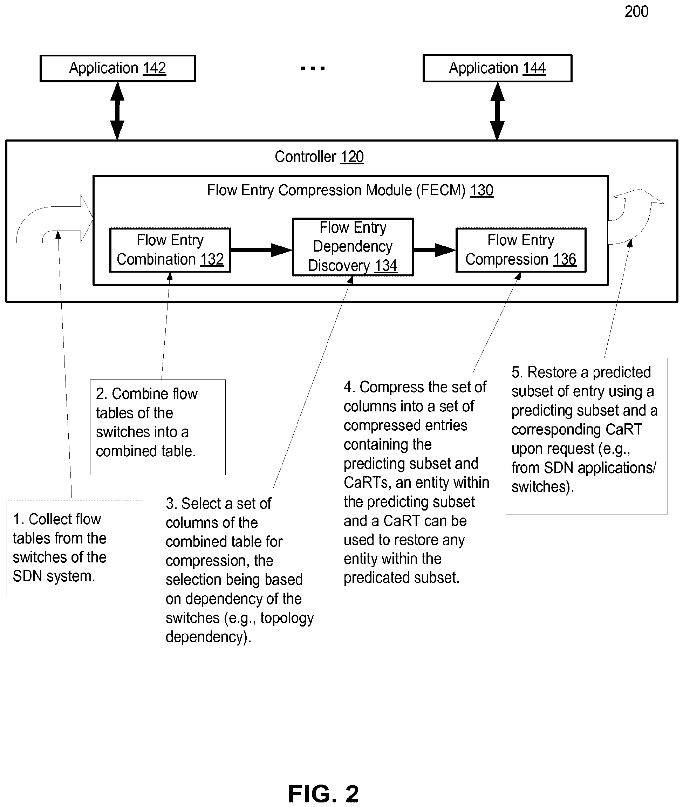

**Figure 2** illustrates operations of a flow entry compression module according to one embodiment of the invention. System 200 of **Figure 2** is similar to system 100 of **Figure 1****,** and the same or similar references indicate elements or components having the same or similar functionalities. Some blocks and connectivities are omitted in **Figure 2** to leave space to discuss the data protection process more clearly. Task boxes 1 to 5 illustrate the order in which operations are performed according to one embodiment of the invention.

At task box 1, FECM 130 collects flow tables from the switches of the SDN system. The switches may not be all the switches of the SDN system, but only a subset based on a criteria of controller 120. At task box 2, flow entry combination component 132 combines the flow tables into a combined table (also referred to as a joint table). Each row within the combined table is keyed off a common field of each flow table. Note flow tables may be implemented in a variety of data structures, such as maps, lists, arrays, files, tables, relational databases, etc. Further, the discussion of columns and rows within these tables is arbitrary. While the examples given in this specification focuses on flow tables implemented with rows being flow entries and columns being different entities of a flow table such as match fields and actions, it is trivial to modify the data structure and apply embodiments of the invention to a flow table with columns being flow entries and rows being flow table entities.

At task box 3, FECM 130 selects a set of columns of the combined table for compression. The selection may be based on dependency of the switches such as topology dependency as discussed in more details herein. At task box 4, FECM 130 compresses the set of columns into a set of compressed entries containing a predicting subset and a set of classification and regression trees (CaRTs), where an entity within the predicting subset and a CaRT can be used to restore any entity within the predicted subset. The restoration is to derive the entity with in the predicted subset through the predicting subset and the CaRT. The restoration may use one entity within the predicting subset, one or more entries within the predicted subset, and corresponding one or more CaRTs. At task box 5, FECM 130 may restore a predicted subset of entry using a predicting subset (plus one or more entities within the predicted subset in some cases) and corresponding one or more CaRTs upon request, where the request may come from for example applications 142-144 or switches 122-126. The details of operation in the task boxes are discussed herein below.

### Combining Multiple Tables

One key challenge of maintaining forwarding state of a network is to reduce the overhead in storing all the flow tables of all switches. The first step is to combine tables from all *N* switches into one large table, using the column of the match field as the matching key. We model the forwarding table of switch *Sᵢ* as *tᵢ* =< *match_fieldᵢ*, *actionᵢ*, *counterᵢ*, *timer,* >, where 1 ≤ *i* ≤ *N.* The *match_fieldᵢ* is a column of the fields used for packet matching and the *actionᵢ* is a column of all the actions for each flow entry. Then we create a joint table:
*T* = < U_{*i*=}*ₗ^{N}match_fieldᵢ*, *actionᵢ*, ... *actionₙ*, *counterₗ*, ... *counterₙ*, *timerₗ*, ... *timerₙ*>.

Since timer and counter information are usually considered as soft states of the network and it is less critical to maintain their updates, only the actions are discussed in detail below, i.e., T =< U_{*i*=}*₁^{N}match_fieldᵢ*, *actionₗ*, ... *actionₙ>.* But there is no fundamental limitation of including other fields in the flow table and embodiments of the invention applies to compression based on the other fields too, including the ones used for flow tables but other than the defined counter field, timer field.

### Exploring Dependency of Flow Entries

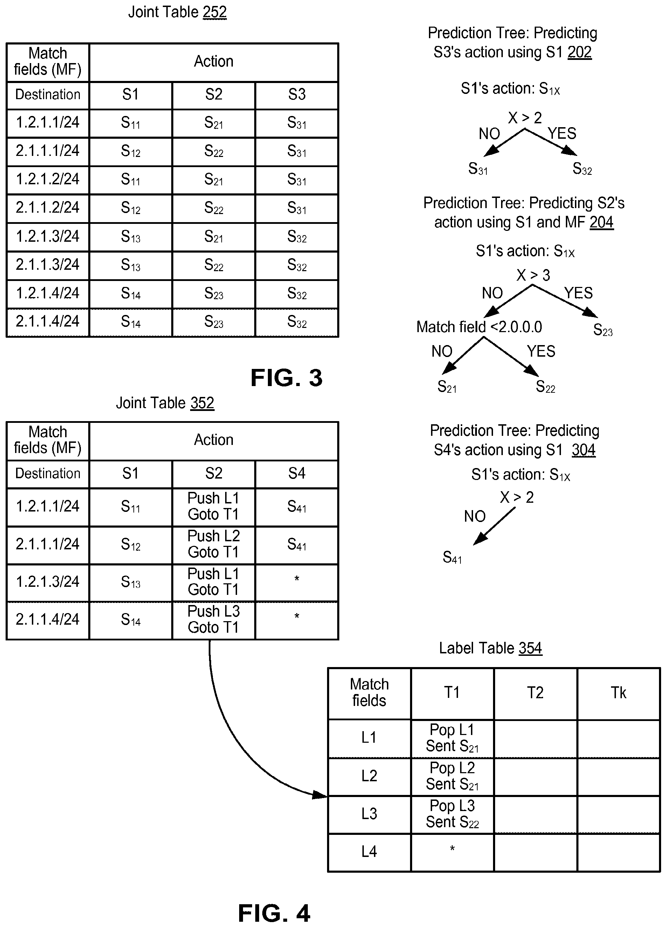

After combining the forwarding tables to the joint network wide forwarding table, we can further reduce the redundancy between rows and columns. **Figure 3** illustrates examples of predicting one table column through another table column according to one embodiment of the invention. The joint table 252 is the result of combining flow tables of switches S1, S2, and S3, each of which has a rule matching on the destination IP address and then outputs to a port. To differentiate ports in different switches, we use *Sᵢₓ* to represent the port *x* on switch *i.*

Because of the topological properties, there can be dependencies between actions of different switches. From the joint table in **Figure 3****,** there is a correlation between the action of S1 and the action of S3. The correlation can be described as a decision tree shown in the top right side of the figure. For the action of S1, forwarding to port *S₁ₓ*, if *x* > 2, then the action of S3 is forwarding to port *S₃₂*, otherwise, S3 will forward it to S₃₁. Prediction tree 202 illustrates the correlation. Thus, we only need to save the action of S1 and the prediction tree, using them to infer the values of S3 accurately.

The bottom right side of **Figure 3** shows the prediction tree 204 for S2 using S1. In this case, we need to use two columns, the action of S1 and the match field. If x > 3, S2's action is to use port *S₂₃*. If not, then we need to further examine if the match field < 2.0.0.0> to determine if the port is S₃₂ or S₃₁ (the first IP address field value 2 alone is sufficient for the determination, thus the rest fields are shown as zeroes).

Thus, we only need to explicitly store the first two columns of the original table, match field and S1's action, as well as the two prediction trees, instead of saving the original table. Moreover, we can further reduce the redundancy by combining rows within the first two columns. For example, 1.2.1.1/24 and 1.2.1.2/24 have the same action on S1, and we can further combine them into one entry. Although the reduction may not be significant in this example, if the number of rows grows, the benefit will increase as well.

The prediction can also handle more complex scenarios. **Figure 4** illustrates examples of predicting one table column with wildcards and multiple tables according to one embodiment of the invention. Joint table 352 is the result of combining flow tables of switches S1, S2, and S4, each of which has a rule matching on the destination IP address and then outputs to a port. Joint table 352 contains a wildcard bit for the last two rows, as switch S4 do not see the flows. Thus, the wildcard bit denotes the special value of the action. Thus, the prediction tree 302 predict S4 using S1 and it contains only branch, where if x > 2 is false, S4's action is to forward to S₄₁, otherwise S4 takes no action (wildcard).

It is possible that an action of one switch contains look-up in another table. For example, the action of S2 in Figure 3 consists of pushing a label and then going to the label table. We could combine the two tables into one big table, by concatenating the label table 354 to the end of the first joint table 352, since it is just a different match field. We can perform optimization to intelligently determine if we should keep them separate or combine them.

In order to handle multiple tables and wildcard bits, in one embodiment, a binary matrix for T is built by marking all the wildcard bits to 0, and 1 otherwise. We may use a clustering algorithm to identify the best partition of the table. Rows in the same partition means that they have similar set of wildcard bits. For **Figure 4****,** the entries using IP address for lookup keys will be in a different partition from those entries using label as the lookup key. Each partition is then compressed separately.

Since the joint table is a combination of forwarding table of each switch, it is essentially driven by the routing policies of the network. Thus, we can take advantage of commonly used policies (e.g., routing schemes) to guide the selection of input for compression. Instead of random sampling, in one embodiment, a stratified sampling technique is utilized, which is suitable to partition the entire data set into groups based on a factor that may influence the variable being measured. Using the technique, one may first partition the entire dataset into groups, and then obtain a random sample from each group.

We may create the groups based on the knowledge of topology and routing. Assuming the partition generates n group. We first create one group per ingress-egress switch pair. That is, the group of flow table entries sharing the same ingress-egress switches. Then we assign the match fields (rows) to each group, by examining the first and last switches that the flow traverses in a particular topology. All the rows are groups to *g₁*, *g₂*, ... *gₙ*. Each group *gᵢ* is sampled under the probability *pᵢ* =|*gᵢ*|/∑*ⱼ*|*gⱼ*|. Within group *i*, we create sub-groups based on the destinations, which is based on the intuition that routing is often destination based. Similarly, the probability of sampling within each sub-group is based on its population share. In one embodiment, rows are then randomly sampled according to the probability within each sub-group. Through the weighted sampling of each subgroup (instead of randomly sampling of the whole group) for compression, it is less likely a certain portion of the network is compressed more than its fair share.

### Selecting The Predicting and Predicted Set From Flow Entries

We build our compression model upon a machine learning based compression method that exploits the correlation between columns of a table. Embodiments of the invention explicitly store a subset of the attributes (or columns) and then use them to predict the values of the remaining attributes. More precisely, given an *n*-column table T, embodiments of the invention select a subset of columns and generate a *k*-column table T', where *k < n,* and build a Classification and Regression Tree (CaRT) for each of the remaining *n* - *k* attributes. The models, denoted as *CaRT* = *CaRT₁*,...*CaRTₙ₋ₖ* are in the form of a regression based decision trees, which uses the attributes in T' to predict the value of the target attribute. The term column and attribute are used interchangeably herein below. Thus, the storage space is reduced from storing T into T' plus the storage for the prediction models CaRT. To improve compression rate, an earlier approach is disclosed in a paper entitled "SPARTAN: A Model-Based Semantic Compression System for Massive Data Tables," by Shivnath Babu et al, in ACM SIGMOD 2001 May 21 (hereinafter "Babu"). Babu allows a lossy compression, meaning that the prediction can be inaccurate, but the offset to the actual value should be bounded by a pre-defined threshold. The key steps of Babu may be summarized below.

Identify dependency between columns: The key challenge is to identify T' and then use them to build CaRTs. However, the search space for the best T ' as well as the CaRTs are exponential to the number of columns. To reduce the search space, we need an efficient way to identify the dependencies among attributes. One may use a Bayesian network, where the nodes are the attributes and the edges represent the strong predictive correlations between them. For any attribute, the attributes that can be used for prediction are most likely its ascendants or descendants in the Bayesian graph, as they are highly correlated with the attribute to be predicted

Build the prediction model: Given the input table T and the Bayesian network built for attributes of T, we need to select a subset of attributes T' which will be used to predict other attributes so that the total storage cost is minimized. Assume that attribute *Xi* is an attribute to be predicted, we need to build a CaRT for *Xi* using a subset of attributes *xᵢ* ⊂T', so that the values of Xi can be accurately predicted by *xᵢ.* Imaginably, with a large number of attributes, there is a huge space of possible attribute prediction strategies. This step is an iterative process. It involves two components: the CaRT selector that selects T' and the CaRT builder which is responsible for actually building the CaRT for the predictors. Babu has proved that the problem of selecting a set of predictors to minimize the total cost can be mapped to the Weighted Maximum Independent Set (WMIS) problem, thus is known to be NP-hard. Then it proposes two heuristics to achieve close-to-optimal solutions.

Aggregate rows to further reduce redundancy: Once the T' is determined, it applies a fascicle-based algorithm to further improve the compression ratio via row-wise clustering on T'. Thus, the number of rows for T' can be smaller than the number of rows in T.

Even though Babu's model is a good way for compression, it cannot be applied to flow table entry compression directly. Babu assumes that the table compression can afford loss. That is generally not applicable to flow table entry compression. For example, the match field and action fields have zero error tolerance. This different in error tolerance is not just a simple change to the input, but requires changes to the solution as well. Embodiments of the invention applies a lossless compression model, thus predicted attributes can be a predictor of others. Because the "prediction" in the embodiments of the invention is lossless and results in full restoration of the predicted attributes, terms like "restore" and "restoring" are used to indicate the lossless nature of the prediction.

After selecting rows of the joint table for compression through flow entry dependency discovery 134, we may use flow entry compression 136 to compress using a compression model that improves upon the Babu's model. The process is to select the best subset of attributes for predictors (also referred to as the predicting set) and construct CaRT for the remaining attributes (also referred to as the predicted set). One of the goals for flow entry compression 136 is to minimize the total storage cost, which includes two types of costs: 1) the materialization cost, which is the cost for storing the predicting set; and 2) the prediction cost, which is the cost for storing the CaRT models. Because of the zero error tolerance for the attributes, we also need to store the outliers, i.e., the misclassified entries, which is also part of the prediction cost.

Because of the difference in error tolerance, we cannot directly apply the existing Weighted Maximum Independent Set algorithm (WMIS) in Babu. This is because WMIS assumes that the predicted attributes cannot further be predictors. Thus embodiments of the invention develop a greedy algorithm with incremental perturbations to further improve the result. During the selection, we make use of not only the graph structure of the Bayesian network, but also the topological properties of the original network to improve on the efficiency.

Overall, we start with an empty predictor set. Then iteratively, we add attributes into the predictor set, evaluate the changes to the total cost, and then determine if the attributes should be added or not. After all the attributes are visited once, we launch the improvement iterations, which randomly select an attribute and evaluate the changes on the cost if it is placed otherwise.

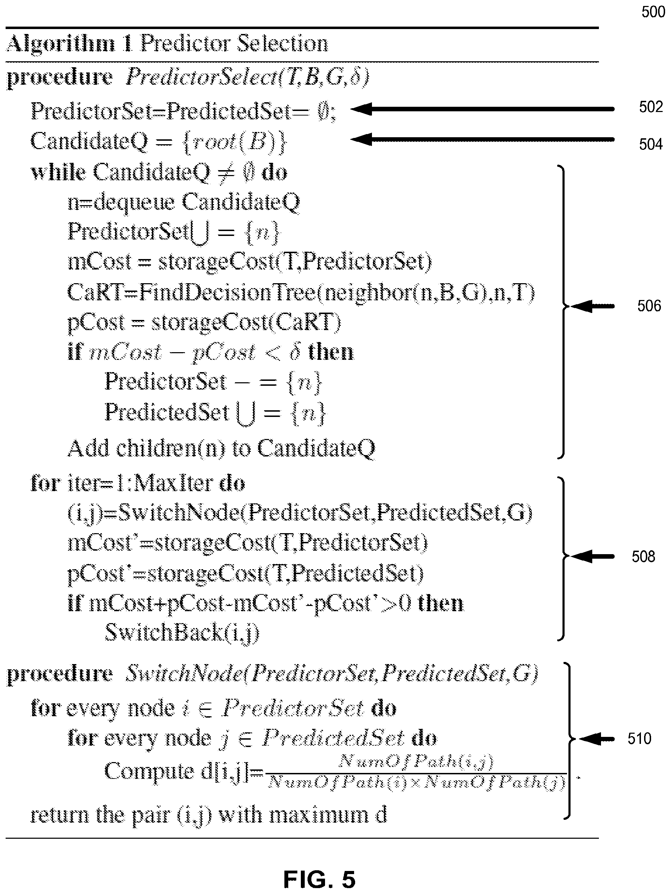

**Figure 5** is a pseudo code illustrating the selection of the predicting set and the predicted set according to one embodiment of the invention. The method 500 operates a procedure *PredictorSelect*().*PredictorSelect*() has an input of the original table T, which is the joint table after the combination (e.g., through flow entry combination component 132 of FECM 130 of **Figure 1****).** It also has the input of Bayesian network *B*, which indicates the dependency of flow entries discussed herein above, a pre-defined threshold *δ* to control the cost, and the network topology *G*. The *PredictorSet* and *PredictedSet* are null at reference 502. Then at reference 504, the root node of *B* is added to the queue of nodes in *CanddidateQ.*

At reference 506, each time we compute the cost we determine if we need to materialize this mode (*mCost*) and if we need to predict it (*pCost*). If the benefit of prediction is larger than *δ*, we place *n* to *PredictedSet,* otherwise, it remains in the *PredictorSet. storageCost* computes the cost for storing a set of data. *FindDecisionTree* builds the CaRT using the set of attributes in *neighbor(n)* to predict *n*'s values on *T.* neighbor return n's neighboring nodes in the Bayesian network *B* and in the network topology G. After finishing with one node, we put all its children into the *CandidateQ* for later iterations. This process continues until all nodes are examined once.

Next, at reference 508, we perform random walk by switching a pair of nodes in the *PredictorSet* and *PredictedSet,* based on their commonality in path, measured in *d,* which is computed through procedure *SwitchNode* at reference 510. The function *NumOfPath* computes the number of paths between (*i,j*), *i,* and *j*. The switching of *i,j* is revoked if it increases the total cost. The perturbation stops after iteration reaches *Maxlter,* a predetermined iteration limit.

### Flow Diagrams for Compressing Forwarding State

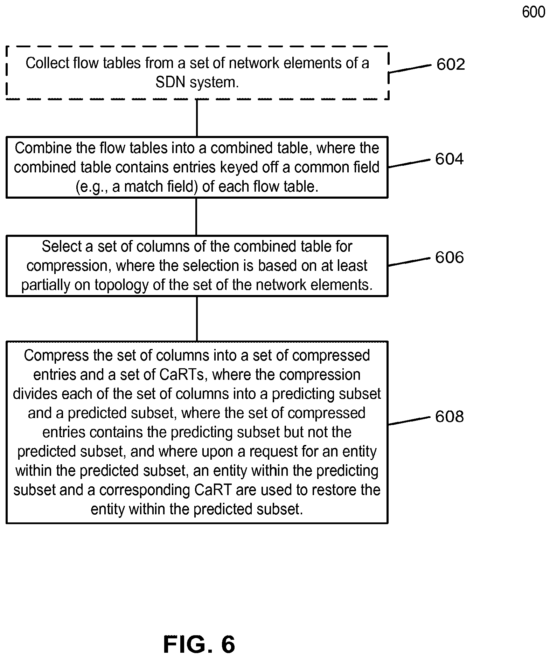

**Figure 6** is a flow diagram illustrating a method for compressing forwarding state according to one embodiment of the invention. Method 600 may be implemented in a network device (e.g., a SDN controller of a SDN system, particularly a flow entry compression module (FECM) 130 illustrated in **Figure 1****).** When method 600 is implemented in a SDN system, the SDN system also contains a set of network elements serving as forwarding elements to forward traffic, where the SDN controller manages traffic forwarding between the network elements. While SDN system is discussed in relating to method 600. The method 600 may also be used in other data networks where flow tables are used for forwarding traffic at the network elements.

The method may optionally start at reference 602, where the network device collects flow tables from a set of network elements of the SDN system. Then at reference 604, the network device combines the flow tables into a combined flow table (or simply combined table, joint table), where the combined table contains entries keyed off a common field of each flow table. For example, each combined table entries (referred to as flow entries) may key off a match field in the combined table.

At reference 606, the network device selects a set of columns of the combined table for compression, where the selection is based at least partially on topology of the set of network elements within the network. The selection explores dependency between the network elements in one embodiment.

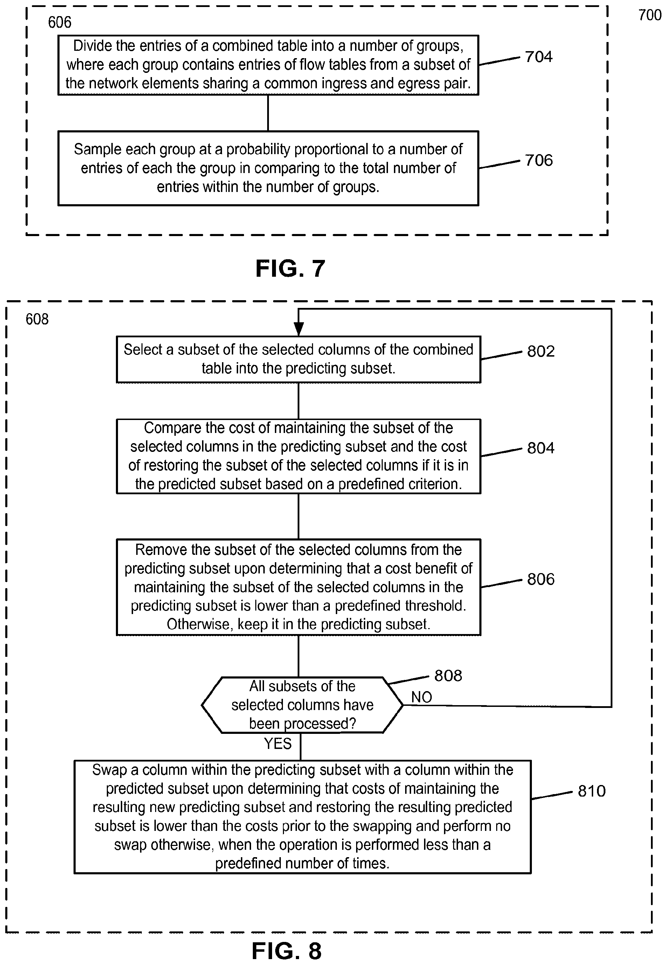

**Figure 7** is a flow diagram illustrating a method of selection of columns of a combined flow table according to one embodiment of the invention. The method is a part of reference 606 in one embodiment. At reference 704, the network device divides the entries of a combined table into a number of groups, where each group contains entries of flow tables from a subset of the network elements sharing a common ingress and egress pair. Then at reference 706, each group is sampled at a probability proportional to a number of entries of each group in comparing to the total number of entries within the number of groups. The proportional sampling prevents flow entry compression unduly concentrate a particular network segment (e.g., one or more ingress and egress pairs).

Referring back to **Figure 6****,** the flow goes to reference 608, after the set of columns of the combined table for compression is selected at reference 606. At reference 608, the network device compresses the set of selected columns into a set of compressed entries and a set of CaRTs, where the compression divides each of the set columns into a predicting subset and a predicted subset, where the set of compressed entries contains the predicting subset but not the predicted subset, and where upon a request for an entity within the predicted subset, an entity (sometimes more entities) within the predicting subset and a corresponding CaRT are used to restore the entity within the predicted subset. The compression utilizes the machine learning based compression method discussed herein above. Note that since the compression in embodiments of the invention is lossless, a predicted attributes can be a predicator of others. Thus some entities within the predicted subset can be utilized to predict other entities within the predicted subset, in which case one or more entities with the predicting subset, one or more entities within the predicted subset, and one or more corresponding CaRTs may be used to restore the entity within the predicted subset.

**Figure 8** is a flow diagram illustrating a method of compression of selected columns of a combined flow table according to one embodiment of the invention. The method is a part of reference 608 in one embodiment. At reference 802, the network device selects a subset of the selected columns of the combined table into a predicting subset. In one embodiment, the root node of a Bayesian network, which indicates the dependency of flow entries, is selected initially.

Then at reference 804, the network device 804 compares the cost of maintaining the subset of the selected columns in the predicting subset (e.g., *mCost* in **Figure 5****)** and the cost of restoring the subset of the selected columns (e.g., *pCost* in **Figure 5****)** if it is in the predicted subset based on a predefined criterion. The predefined criterion may be units of storage space taken, percentage of computing power need to restore (predict) a predicted subset.

At reference 806, the network device removes the subset of the selected columns from the predicting subset upon determining that a cost benefit of maintaining the subset of the selected columns in the predicting subset is lower than a predefined threshold, otherwise the subset is keep in the predicting subset. The cost benefit may be the pre-defined threshold *δ* as discussed herein above relating to **Figure 5** in one embodiment. At reference 808, it's determined whether all subset of the selected columns have been processed. If it has not, the process returns to reference 802 to the operations of references 802-806 repeated, otherwise, the process goes to reference 810.

At reference 810, the network device swaps a column within the predicting subset with a column within the predicted subset upon determining that costs of maintaining the resulting new predicting subset and restoring the resulting predicted subset is lower than the costs prior to the swapping and performs no swap otherwise, when the operations are performed less than a pre-defined number of times. The columns are selected based on a commonality in path in one embodiment.

### Systems and Network Devices Implementing The Compression Method

A network device (ND) is an electronic device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

**Figure 9A** illustrates connectivity between network devices (NDs) within an exemplary network, as well as three exemplary implementations of the NDs, according to some embodiments of the invention. **Figure 9A** shows NDs 900A-H, and their connectivity by way of lines between A-B, B-C, C-D, D-E, E-F, F-G, and A-G, as well as between H and each of A, C, D, and G. These NDs are physical devices, and the connectivity between these NDs can be wireless or wired (often referred to as a link). An additional line extending from NDs 900A, E, and F illustrates that these NDs act as ingress and egress points for the network (and thus, these NDs are sometimes referred to as edge NDs; while the other NDs may be called core NDs).

Two of the exemplary ND implementations in **Figure 9A** are: 1) a special-purpose network device 902 that uses custom application-specific integrated-circuits (ASICs) and a proprietary operating system (OS); and 2) a general purpose network device 904 that uses common off-the-shelf (COTS) processors and a standard OS.

The special-purpose network device 902 includes networking hardware 910 comprising compute resource(s) 912 (which typically include a set of one or more processors), forwarding resource(s) 914 (which typically include one or more ASICs and/or network processors), and physical network interfaces (NIs) 916 (sometimes called physical ports), as well as non-transitory machine readable storage media 918 having stored therein networking software 920. A physical NI is hardware in a ND through which a network connection (e.g., wirelessly through a wireless network interface controller (WNIC) or through plugging in a cable to a physical port connected to a network interface controller (NIC)) is made, such as those shown by the connectivity between NDs 900A-H. During operation, the networking software 920 may be executed by the networking hardware 910 to instantiate a set of one or more networking software instance(s) 922. Each of the networking software instance(s) 922, and that part of the networking hardware 910 that executes that network software instance (be it hardware dedicated to that networking software instance and/or time slices of hardware temporally shared by that networking software instance with others of the networking software instance(s) 922), form a separate virtual network element 930A-R. Each of the virtual network element(s) (VNEs) 930A-R includes a control communication and configuration module 932A-R (sometimes referred to as a local control module or control communication module) and forwarding table(s) 934A-R, such that a given virtual network element (e.g., 930A) includes the control communication and configuration module (e.g., 932A), a set of one or more forwarding table(s) (e.g., 934A), and that portion of the networking hardware 910 that executes the virtual network element (e.g., 930A).

The special-purpose network device 902 is often physically and/or logically considered to include: 1) a ND control plane 924 (sometimes referred to as a control plane) comprising the compute resource(s) 912 that execute the control communication and configuration module(s) 932A-R; and 2) a ND forwarding plane 926 (sometimes referred to as a forwarding plane, a data plane, or a media plane) comprising the forwarding resource(s) 914 that utilize the forwarding table(s) 934A-R and the physical NIs 916. By way of example, where the ND is a router (or is implementing routing functionality), the ND control plane 924 (the compute resource(s) 912 executing the control communication and configuration module(s) 932A-R) is typically responsible for participating in controlling how data (e.g., packets) is to be routed (e.g., the next hop for the data and the outgoing physical NI for that data) and storing that routing information in the forwarding table(s) 934A-R, and the ND forwarding plane 926 is responsible for receiving that data on the physical NIs 916 and forwarding that data out the appropriate ones of the physical NIs 916 based on the forwarding table(s) 934A-R.

**Figure 9B** illustrates an exemplary way to implement the special-purpose network device 902 according to some embodiments of the invention. **Figure 9B** shows a special-purpose network device including cards 938 (typically hot pluggable). While in some embodiments the cards 938 are of two types (one or more that operate as the ND forwarding plane 926 (sometimes called line cards), and one or more that operate to implement the ND control plane 924 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec) (RFC 4301 and 4309), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 936 (e.g., a first full mesh coupling the line cards and a second full mesh coupling all of the cards).

Returning to **Figure 9A****,** the general purpose network device 904 includes hardware 940 comprising a set of one or more processor(s) 942 (which are often COTS processors) and network interface controller(s) 944 (NICs; also known as network interface cards) (which include physical NIs 946), as well as non-transitory machine readable storage media 948 having stored therein software 950. During operation, the processor(s) 942 execute the software 950 to instantiate a hypervisor 954 (sometimes referred to as a virtual machine monitor (VMM)) and one or more virtual machines 962A-R that are run by the hypervisor 954, which are collectively referred to as software instance(s) 952. A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes. Each of the virtual machines 962A-R, and that part of the hardware 940 that executes that virtual machine (be it hardware dedicated to that virtual machine and/or time slices of hardware temporally shared by that virtual machine with others of the virtual machine(s) 962A-R), forms a separate virtual network element(s) 960A-R.

The virtual network element(s) 960A-R perform similar functionality to the virtual network element(s) 930A-R. For instance, the hypervisor 954 may present a virtual operating platform that appears like networking hardware 910 to virtual machine 962A, and the virtual machine 962A may be used to implement functionality similar to the control communication and configuration module(s) 932A and forwarding table(s) 934A (this virtualization of the hardware 940 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). However, different embodiments of the invention may implement one or more of the virtual machine(s) 962A-R differently. For example, while embodiments of the invention are illustrated with each virtual machine 962A-R corresponding to one VNE 960A-R, alternative embodiments may implement this correspondence at a finer level granularity (e.g., line card virtual machines virtualize line cards, control card virtual machine virtualize control cards, etc.); it should be understood that the techniques described herein with reference to a correspondence of virtual machines to VNEs also apply to embodiments where such a finer level of granularity is used.

In certain embodiments, the hypervisor 954 includes a virtual switch that provides similar forwarding services as a physical Ethernet switch. Specifically, this virtual switch forwards traffic between virtual machines and the NIC(s) 944, as well as optionally between the virtual machines 962A-R; in addition, this virtual switch may enforce network isolation between the VNEs 960A-R that by policy are not permitted to communicate with each other (e.g., by honoring virtual local area networks (VLANs)).

The third exemplary ND implementation in **Figure 9A** is a hybrid network device 906, which includes both custom ASICs/proprietary OS and COTS processors/standard OS in a single ND or a single card within an ND. In certain embodiments of such a hybrid network device, a platform VM (i.e., a VM that that implements the functionality of the special-purpose network device 902) could provide for para-virtualization to the networking hardware present in the hybrid network device 906.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 930A-R, VNEs 960A-R, and those in the hybrid network device 906) receives data on the physical NIs (e.g., 916, 946) and forwards that data out the appropriate ones of the physical NIs (e.g., 916, 946). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP) (RFC 768, 2460, 2675, 4113, and 5405), Transmission Control Protocol (TCP) (RFC 793 and 1180), and differentiated services (DSCP) values (RFC 2474, 2475, 2597, 2983, 3086, 3140, 3246, 3247, 3260, 4594, 5865, 3289, 3290, and 3317).

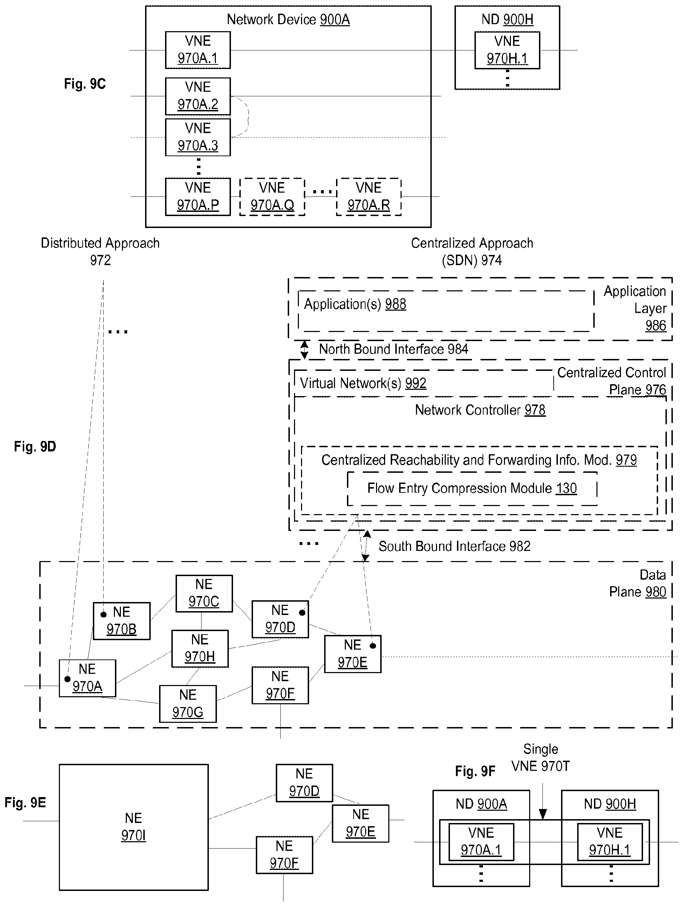

**Figure 9C** illustrates various exemplary ways in which VNEs may be coupled according to some embodiments of the invention. **Figure 9C** shows VNEs 970A.1-970A.P (and optionally VNEs 970A.Q-970A.R) implemented in ND 900A and VNE 970H.1 in ND 900H. In **Figure 9C****,** VNEs 970A.1-P are separate from each other in the sense that they can receive packets from outside ND 900A and forward packets outside of ND 900A; VNE 970A.1 is coupled with VNE 970H.1, and thus they communicate packets between their respective NDs; VNE 970A.2-970A.3 may optionally forward packets between themselves without forwarding them outside of the ND 900A; and VNE 970A.P may optionally be the first in a chain of VNEs that includes VNE 970A.Q followed by VNE 970A.R (this is sometimes referred to as dynamic service chaining, where each of the VNEs in the series of VNEs provides a different service - e.g., one or more layer 4-7 network services). While **Figure 9C** illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure **9A****,** for example, may form part of the Internet or a private network; and other electronic devices (not shown; such as end user devices including workstations, laptops, netbooks, tablets, palm tops, mobile phones, smartphones, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in **Figure 9A** may also host one or more such servers (e.g., in the case of the general purpose network device 904, one or more of the virtual machines 962A-R may operate as servers; the same would be true for the hybrid network device 906; in the case of the special-purpose network device 902, one or more such servers could also be run on a hypervisor executed by the compute resource(s) 912); in which case the servers are said to be co-located with the VNEs of that ND.

A virtual network is a logical abstraction of a physical network (such as that in **Figure 9A****)** that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN RFC 4364) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

**Fig. 9D** illustrates a network with a single network element on each of the NDs of **Figure 9A****,** and within this straight forward approach contrasts a traditional distributed approach (commonly used by traditional routers) with a centralized approach for maintaining reachability and forwarding information (also called network control), according to some embodiments of the invention. Specifically, **Figure 9D** illustrates network elements (NEs) 970A-H with the same connectivity as the NDs 900A-H of **Figure 9A****.**

**Figure 9D** illustrates that the distributed approach 972 distributes responsibility for generating the reachability and forwarding information across the NEs 970A-H; in other words, the process of neighbor discovery and topology discovery is distributed.

For example, where the special-purpose network device 902 is used, the control communication and configuration module(s) 932A-R of the ND control plane 924 typically include a reachability and forwarding information module to implement one or more routing protocols (e.g., an exterior gateway protocol such as Border Gateway Protocol (BGP) (RFC 4271), Interior Gateway Protocol(s) (IGP) (e.g., Open Shortest Path First (OSPF) (RFC 2328 and 5340), Intermediate System to Intermediate System (IS-IS) (RFC 1142), Routing Information Protocol (RIP) (version 1 RFC 1058, version 2 RFC 2453, and next generation RFC 2080)), Label Distribution Protocol (LDP) (RFC 5036), Resource Reservation Protocol (RSVP) (RFC 2205, 2210, 2211, 2212, as well as RSVP-Traffic Engineering (TE): Extensions to RSVP for LSP Tunnels RFC 3209, Generalized Multi-Protocol Label Switching (GMPLS) Signaling RSVP-TE RFC 3473, RFC 3936, 4495, and 4558)) that communicate with other NEs to exchange routes, and then selects those routes based on one or more routing metrics. Thus, the NEs 970A-H (e.g., the compute resource(s) 912 executing the control communication and configuration module(s) 932A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 924. The ND control plane 924 programs the ND forwarding plane 926 with information (e.g., adjacency and route information) based on the routing structure(s). For example, the ND control plane 924 programs the adjacency and route information into one or more forwarding table(s) 934A-R (e.g., Forwarding Information Base (FIB), Label Forwarding Information Base (LFIB), and one or more adjacency structures) on the ND forwarding plane 926. For layer 2 forwarding, the ND can store one or more bridging tables that are used to forward data based on the layer 2 information in that data. While the above example uses the special-purpose network device 902, the same distributed approach 972 can be implemented on the general purpose network device 904 and the hybrid network device 906.

**Figure 9D** illustrates that a centralized approach 974 (also known as software defined networking (SDN)) that decouples the system that makes decisions about where traffic is sent from the underlying systems that forwards traffic to the selected destination. The illustrated centralized approach 974 has the responsibility for the generation of reachability and forwarding information in a centralized control plane 976 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 976 has a south bound interface 982 with a data plane 980 (sometime referred to the infrastructure layer, network forwarding plane, or forwarding plane (which should not be confused with a ND forwarding plane)) that includes the NEs 970A-H (sometimes referred to as switches, forwarding elements, data plane elements, or nodes). The centralized control plane 976 includes a network controller 978, which includes a centralized reachability and forwarding information module 979 that determines the reachability within the network and distributes the forwarding information to the NEs 970A-H of the data plane 980 over the south bound interface 982 (which may use the OpenFlow protocol). The flow entry compression module (FECM) 130 is implemented within centralized reachability and forwarding information module 979.

The network intelligence is centralized in the centralized control plane 976 executing on electronic devices that are typically separate from the NDs. For example, where the special-purpose network device 902 is used in the data plane 980, each of the control communication and configuration module(s) 932A-R of the ND control plane 924 typically include a control agent that provides the VNE side of the south bound interface 982. In this case, the ND control plane 924 (the compute resource(s) 912 executing the control communication and configuration module(s) 932A-R) performs its responsibility for participating in controlling how data (e.g., packets) is to be routed (e.g., the next hop for the data and the outgoing physical NI for that data) through the control agent communicating with the centralized control plane 976 to receive the forwarding information (and in some cases, the reachability information) from the centralized reachability and forwarding information module 979 (it should be understood that in some embodiments of the invention, the control communication and configuration module(s) 932A-R, in addition to communicating with the centralized control plane 976, may also play some role in determining reachability and/or calculating forwarding information - albeit less so than in the case of a distributed approach; such embodiments are generally considered to fall under the centralized approach 974, but may also be considered a hybrid approach).

While the above example uses the special-purpose network device 902, the same centralized approach 974 can be implemented with the general purpose network device 904 (e.g., each of the VNE 960A-R performs its responsibility for controlling how data (e.g., packets) is to be routed (e.g., the next hop for the data and the outgoing physical NI for that data) by communicating with the centralized control plane 976 to receive the forwarding information (and in some cases, the reachability information) from the centralized reachability and forwarding information module 979; it should be understood that in some embodiments of the invention, the VNEs 960A-R, in addition to communicating with the centralized control plane 976, may also play some role in determining reachability and/or calculating forwarding information - albeit less so than in the case of a distributed approach) and the hybrid network device 906. In fact, the use of SDN techniques can enhance the NFV techniques typically used in the general purpose network device 904 or hybrid network device 906 implementations as NFV is able to support SDN by providing an infrastructure upon which the SDN software can be run, and NFV and SDN both aim to make use of commodity server hardware and physical switches.

**Figure 9D** also shows that the centralized control plane 976 has a north bound interface 984 to an application layer 986, in which resides application(s) 988. The centralized control plane 976 has the ability to form virtual networks 992 (sometimes referred to as a logical forwarding plane, network services, or overlay networks (with the NEs 970A-H of the data plane 980 being the underlay network)) for the application(s) 988. Thus, the centralized control plane 976 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While **Figure 9D** shows the distributed approach 972 separate from the centralized approach 974, the effort of network control may be distributed differently or the two combined in certain embodiments of the invention. For example: 1) embodiments may generally use the centralized approach (SDN) 974, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 974, but may also be considered a hybrid approach.

While **Figure 9D** illustrates the simple case where each of the NDs 900A-H implements a single NE 970A-H, it should be understood that the network control approaches described with reference to **Figure 9D** also work for networks where one or more of the NDs 900A-H implement multiple VNEs (e.g., VNEs 930A-R, VNEs 960A-R, those in the hybrid network device 906). Alternatively or in addition, the network controller 978 may also emulate the implementation of multiple VNEs in a single ND. Specifically, instead of (or in addition to) implementing multiple VNEs in a single ND, the network controller 978 may present the implementation of a VNE/NE in a single ND as multiple VNEs in the virtual networks 992 (all in the same one of the virtual network(s) 992, each in different ones of the virtual network(s) 992, or some combination). For example, the network controller 978 may cause an ND to implement a single VNE (a NE) in the underlay network, and then logically divide up the resources of that NE within the centralized control plane 976 to present different VNEs in the virtual network(s) 992 (where these different VNEs in the overlay networks are sharing the resources of the single VNE/NE implementation on the ND in the underlay network).

On the other hand, **Figures 9E and 9F** respectively illustrate exemplary abstractions of NEs and VNEs that the network controller 978 may present as part of different ones of the virtual networks 992. **Figure 9E** illustrates the simple case of where each of the NDs 900A-H implements a single NE 970A-H (see Figure 9D), but the centralized control plane 976 has abstracted multiple of the NEs in different NDs (the NEs 970A-C and G-H) into (to represent) a single NE 9701 in one of the virtual network(s) 992 of Figure 9D, according to some embodiments of the invention. Figure 9E shows that in this virtual network, the NE 9701 is coupled to NE 970D and 970F, which are both still coupled to NE 970E.

**Figure 9F** illustrates a case where multiple VNEs (VNE 970A.1 and VNE 970H. 1) are implemented on different NDs (ND 900A and ND 900H) and are coupled to each other, and where the centralized control plane 976 has abstracted these multiple VNEs such that they appear as a single VNE 970T within one of the virtual networks 992 of Figure 9D, according to some embodiments of the invention. Thus, the abstraction of a NE or VNE can span multiple NDs.

While some embodiments of the invention implement the centralized control plane 976 as a single entity (e.g., a single instance of software running on a single electronic device), alternative embodiments may spread the functionality across multiple entities for redundancy and/or scalability purposes (e.g., multiple instances of software running on different electronic devices).

Similar to the network device implementations, the electronic device(s) running the centralized control plane 976, and thus the network controller 978 including the centralized reachability and forwarding information module 979, may be implemented a variety of ways (e.g., a special purpose device, a general-purpose (e.g., COTS) device, or hybrid device). These electronic device(s) would similarly include compute resource(s), a set or one or more physical NICs, and a non-transitory machine-readable storage medium having stored thereon the centralized control plane software. For instance, **Figure 10** illustrates, a general purpose control plane device 1004 including hardware 1040 comprising a set of one or more processor(s) 1042 (which are often COTS processors) and network interface controller(s) 1044 (NICs; also known as network interface cards) (which include physical NIs 1046), as well as non-transitory machine readable storage media 1048 having stored therein centralized control plane (CCP) software 1050. The flow entry compression module (FECM) 130 is implemented as a part of CCP software 1050 in one embodiment, and FECM 130 performs method 600 as discussed herein above.

In embodiments that use compute virtualization, the processor(s) 1042 typically execute software to instantiate a hypervisor 1054 (sometimes referred to as a virtual machine monitor (VMM)) and one or more virtual machines 1062A-R that are run by the hypervisor 1054; which are collectively referred to as software instance(s) 1052. A virtual machine is a software implementation of a physical machine that runs programs as if they were executing on a physical, non-virtualized machine; and applications generally are not aware they are running on a virtual machine as opposed to running on a "bare metal" host electronic device, though some systems provide para-virtualization which allows an operating system or application to be aware of the presence of virtualization for optimization purposes. Again, in embodiments where compute virtualization is used, during operation an instance of the CCP software 1050 (illustrated as CCP instance 1076A) on top of an operating system 1064A are typically executed within the virtual machine 1062A. In embodiments where compute virtualization is not used, the CCP instance 1076A on top of operating system 1064A is executed on the "bare metal" general purpose control plane device 1004.

The operating system 1064A provides basic processing, input/output (I/O), and networking capabilities. In some embodiments, the CCP instance 1076A includes a network controller instance 1078. The network controller instance 1078 includes a centralized reachability and forwarding information module instance 1079 (which is a middleware layer providing the context of the network controller 978 to the operating system 1064A and communicating with the various NEs), and an CCP application layer 1080 (sometimes referred to as an application layer) over the middleware layer (providing the intelligence required for various network operations such as protocols, network situational awareness, and user - interfaces). At a more abstract level, this CCP application layer 1080 within the centralized control plane 976 works with virtual network view(s) (logical view(s) of the network) and the middleware layer provides the conversion from the virtual networks to the physical view.

The centralized control plane 976 transmits relevant messages to the data plane 980 based on CCP application layer 1080 calculations and middleware layer mapping for each flow. A flow may be defined as a set of packets whose headers match a given pattern of bits; in this sense, traditional IP forwarding is also flow-based forwarding where the flows are defined by the destination IP address for example; however, in other implementations, the given pattern of bits used for a flow definition may include more fields (e.g., 10 or more) in the packet headers. Different NDs/NEs/VNEs of the data plane 980 may receive different messages, and thus different forwarding information. The data plane 980 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 980, the packet (or a subset of the packet header and content) is typically forwarded to the centralized control plane 976. The centralized control plane 976 will then program forwarding table entries into the data plane 980 to accommodate packets belonging to the flow of the unknown packet. Once a specific forwarding table entry has been programmed into the data plane 980 by the centralized control plane 976, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Each VNE (e.g., a virtual router, a virtual bridge (which may act as a virtual switch instance in a Virtual Private LAN Service (VPLS) (RFC 4761 and 4762) is typically independently administrable. For example, in the case of multiple virtual routers, each of the virtual routers may share system resources but is separate from the other virtual routers regarding its management domain, AAA (authentication, authorization, and accounting) name space, IP address, and routing database(s). Multiple VNEs may be employed in an edge ND to provide direct network access and/or different classes of services for subscribers of service and/or content providers.

Within certain NDs, "interfaces" that are independent of physical NIs may be configured as part of the VNEs to provide higher-layer protocol and service information (e.g., Layer 3 addressing). The subscriber records in the AAA server identify, in addition to the other subscriber configuration requirements, to which context (e.g., which of the VNEs/NEs) the corresponding subscribers should be bound within the ND. As used herein, a binding forms an association between a physical entity (e.g., physical NI, channel) or a logical entity (e.g., circuit such as a subscriber circuit or logical circuit (a set of one or more subscriber circuits)) and a context's interface over which network protocols (e.g., routing protocols, bridging protocols) are configured for that context. Subscriber data flows on the physical entity when some higher-layer protocol interface is configured and associated with that physical entity.

While the flow diagrams in the figures herein above show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, and can be practiced with modification and alteration within the scope of the appended claims. The description is thus to be regarded as illustrative instead of limiting.

## Claims

1. A method implemented in a network device of a software-defined network (SDN) system, wherein the SDN system contains network elements serving as forwarding elements to forward traffic, wherein the network device manages traffic forwarding between the network elements, and wherein the network elements contain flow tables for the traffic forwarding, the method being **characterized by** comprising:
combining (604) flow tables for a set of the network elements into a combined table, wherein each row within the combined table is keyed off a common field of each flow table;
selecting (606) a set of columns of the combined table for compression, wherein the selection is based at least partially on topology of the set of the network elements within the network; and
compressing (608) the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity within the predicting subset and a corresponding CaRT are used to restore the entity within the predicted subset.

2. The method of claim 1, the method further comprising:
collecting (602) the flow tables from the set of the network elements of the SDN system prior to combining the flow tables.

3. The method of claim 1, wherein each entry within the combined table is keyed off a match field entity of each flow table.

4. The method of claim 1, wherein selecting the set of columns of the combined table for compression comprises:
dividing (704) the combined table into a number of groups, wherein each group contains entries of flow tables from a subset of the network elements sharing a common ingress and egress pair; and
sampling (706) each group at a probability proportional to a number of entries of each group in comparing to a total number of entries in the number of groups.

5. The method of claim 1, wherein compressing the set of columns of the combined table into the set of compressed entries comprises:
selecting (802) a subset of the selected columns of the combined table into the predicting subset;
comparing (804) costs of
maintaining the subset of the selected columns in the predicting subset and
restoring the subset of the selected columns if the subset is in the predicted subset, wherein cost computation is based on a predefined criterion; and
removing (806) the subset of the selected columns from the predicting subset upon determining that a cost benefit of maintaining the subset in the predicting subset is lower than a predefined threshold in consideration of costs of restoring the subset.

6. The method of claim 1, wherein compressing the set of columns of the combined table into the set of compressed entries comprises:
swapping (810) a column within the predicting subset with a column within the predicted subset upon determining that costs of maintaining the resulting new predicting subset and restoring the resulting predicted subset is lower than costs prior to the swapping and performs no swapping otherwise, if the operations are performed less than a predefined number of times, wherein the two columns are selected based on a commonality in path of forwarding elements corresponding to the subsets.

7. The method of claim 6, wherein the swapping repeats a predetermined number of times for different column pairs.

8. The method of claim 1, wherein the network device is a controller of the SDN system.

9. A network device coupled to a software-defined network (SDN) system,wherein the SDN system contains network elements serving as forwarding elements to forward traffic, wherein the network device manages traffic forwarding between the network elements, and wherein the network elements contain flow tables for the traffic forwarding, the network device being **characterized by** comprising: a processor (1042) and non-transitory machine-readable storage medium (1048)
containing instructions which when executed by the processor cause the processor to:
combine flow tables for a set of the network elements into a combined table, wherein each row within the combined table is keyed off a common field of each flow table,
select a set of columns of the combined table for compression, wherein the selection is based at least partially on topology of the set of the network elements within the network, and
compress the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity within the predicting subset and a corresponding CaRT are used to restore the entity within the predicted subset.

10. The network device of claim 9, wherein the network device is further to collect the flow tables from the set of the network elements of the SDN system prior to combining the flow tables.

11. The network device of claim 9, wherein each entry within the combined table is to be keyed off a match field entity of each flow table.

12. The network device of claim 9, wherein selecting the set of columns of the combined table for compression includes the network device to:
divide the combined table into a number of groups, wherein each group contains entries of flow tables from a subset of the network elements sharing a common ingress and egress pair, and
sample each group at a probability proportional to a number of entries of each group in comparing to a total number of entries in the number of groups.

13. The network device of claim 9, wherein compressing the set of columns of the combined table into the set of compressed entries includes the network device to:
select a subset of the selected columns of the combined table into the predicting subset,
compare costs of
maintaining the subset of the selected columns in the predicting subset and
restoring the subset of the selected columns if the subset is in the predicted subset, wherein cost computation is based on a predefined criterion, and
remove the subset of the selected columns from the predicting subset upon determining that a cost benefit of maintaining the subset in the predicting subset is lower than a predefined threshold in consideration of costs of restoring the subset.

14. The network device of claim 9, wherein compressing the set of columns of the combined table into the set of compressed entries includes the network device to:
swap a column within the predicting subset with a column within the predicted subset upon determining that costs of maintaining the resulting new predicting subset and restoring the resulting predicted subset is lower than costs prior to the swapping and performs no swapping otherwise, if the operations are performed less than a predefined number of times, wherein the two columns are selected based on a commonality in path of forwarding elements corresponding to the subsets.

15. A non-transitory machine-readable medium having instructions stored therein, which when executed by a processor, cause the processor to perform operations at a network device of a software-defined network (SDN) system, wherein the SDN system contains network elements serving as forwarding elements to forward traffic, wherein the network device manages traffic forwarding between the network elements, and wherein the network elements contain flow tables for the traffic forwarding, the operations being **characterized by** comprising:
combining (604) flow tables for a set of the network elements into a combined table, wherein each row within the combined table is keyed off a common field of each flow table;
selecting (606) a set of columns of the combined table for compression, wherein the selection is based at least partially on topology of the set of the network elements within the network; and
compressing (608) the set of columns of the combined table into a set of compressed entries and a set of classification and regression trees (CaRTs), wherein the compression includes dividing the set of columns of the combined table into a predicting subset and a predicted subset, wherein the set of compressed entries contains the predicting subset but not predicted subset, wherein upon a request for an entity within the predicted subset, an entity within the predicting subset and a corresponding CaRT are used to restore the entity within the predicted subset.

## Patentansprüche

1. Verfahren, das in einer Netzwerkvorrichtung eines software-definierten Netzwerk(SDN)-Systems angewendet wird, wobei das SDN-System Netzwerkelemente enthält, die als Weiterleitungselemente bei der Weiterleitung von Datenverkehr dienen, wobei die Netzwerkvorrichtung eine Weiterleitung von Datenverkehr zwischen den Netzwerkelementen verwaltet, und wobei die Netzwerkelemente Flusstabellen für die Weiterleitung von Datenverkehr enthalten, wobei das Verfahren **dadurch gekennzeichnet ist, dass** es Folgendes umfasst:
Kombinieren (604) von Flusstabellen für eine Menge von Netzwerkelementen zu einer kombinierten Tabelle, wobei jede Zeile innerhalb der kombinierten Tabelle aus einem gemeinsamen Feld jeder Flusstabelle generiert ist;
Auswählen (606) einer Menge von Spalten der kombinierten Tabelle zum Komprimieren, wobei die Auswahl wenigstens teilweise auf einer Topologie der Menge von Netzwerkelementen innerhalb des Netzwerks basiert; und
Komprimieren (608) der Menge von Spalten der kombinierten Tabelle in eine Menge von komprimierten Einträgen und eine Menge von Klassifikations- und Regressionsbäumen (CaRTs),
wobei das Komprimieren ein Aufteilen der Menge von Spalten der kombinierten Tabelle in eine vorhersagende Teilmenge und eine vorhergesagte Teilmenge einschließt, wobei die Menge von komprimierten Einträgen die vorhersagende Teilmenge, jedoch nicht die vorhergesagte Teilmenge enthält, wobei auf Anfrage nach einer Entität innerhalb der vorhergesagten Teilmenge eine Entität innerhalb der vorhersagenden Teilmenge und ein entsprechender CaRT verwendet werden, um die Entität innerhalb der vorhergesagten Teilmenge wiederherzustellen.

2. Verfahren nach Anspruch 1, wobei das Verfahren ferner umfasst:
Sammeln (602) der Flusstabellen der Menge von Netzwerkelementen des SDN-Systems vor dem Kombinieren der Flusstabellen.

3. Verfahren nach Anspruch 1, wobei jeder Eintrag innerhalb der kombinierten Tabelle aus einer Entität übereinstimmender Felder jeder Flusstabelle generiert ist.

4. Verfahren nach Anspruch 1, wobei ein Auswählen der Menge von Spalten der kombinierten Tabelle zum Komprimieren Folgendes umfasst:
Einteilen (704) der kombinierten Tabelle in eine Anzahl von Gruppen, wobei jede Gruppe Einträge von Flusstabellen aus einer Teilmenge der Netzwerkelemente enthält, die sich ein gemeinsames Eintritts- und Austrittspaar teilen; und
Abtasten (706) jeder Gruppe bei einer Wahrscheinlichkeit, die proportional ist zu einer Anzahl von Einträgen jeder Gruppe verglichen mit einer Gesamtzahl von Einträgen in der Anzahl der Gruppen.

5. Verfahren nach Anspruch 1, wobei ein Komprimieren der Menge von Spalten der kombinierten Tabelle in die Menge von komprimierten Einträgen Folgendes umfasst:
Auswählen (802) einer Teilmenge der ausgewählten Spalten der kombinierten Tabelle in die vorhersagende Teilmenge; Vergleichen (804) von Kosten zum
Erhalten der Teilmenge der ausgewählten Spalten in der vorhersagenden Teilmenge und
Wiederherstellen der Teilmenge der ausgewählten Spalten, falls die Teilmenge sich in der vorhergesagten Teilmenge befindet,
wobei eine Kostenberechnung auf einem vorbestimmten Kriterium basiert; und
Entfernen (806) der Teilmenge der ausgewählten Spalten aus der vorhersagenden Teilmenge beim Bestimmen, dass ein Kostenvorteil beim Erhalten der Teilmenge in der vorhersagenden Gruppe geringer ist, als ein vorbestimmter Schwellenwert unter Berücksichtigung der Kosten der Wiederherstellung der Teilmenge.

6. Verfahren nach Anspruch 1, wobei ein Komprimieren der Menge von Spalten der kombinierten Tabelle in die Menge von komprimierten Einträgen Folgendes umfasst:
Austauschen (810) einer Spalte in der vorhersagenden Teilmenge mit einer Spalte in der vorhergesagten Teilmenge beim Bestimmen, dass Kosten der Erhaltung der resultierenden neuen vorhersagenden Teilmenge und ein Wiederherstellen der resultierenden vorhergesagten Teilmenge geringer sind, als Kosten vor dem Austausch und ansonsten kein Austausch durchführt wird, falls die Vorgänge weniger oft als eine vorbestimmten Anzahl von Malen durchgeführt werden, wobei die beiden Spalten basierend auf einer Pfadgemeinsamkeit von Weiterleitungselementen, die den Teilmengen entsprechen, ausgewählt werden.

7. Verfahren nach Anspruch 6, wobei sich das Austauschen eine vorbestimmte Anzahl von Malen für verschiedene Spaltenpaare wiederholt.

8. Verfahren nach Anspruch 1, wobei die Netzwerkvorrichtung eine Steuerung des SDN-Systems ist.

9. Netzwerkvorrichtung, die mit einem software-definierten Netzwerk(SDN)-System gekoppelt ist, wobei das SDN-System Netzwerkelemente enthält, die als Weiterleitungselemente zur Weiterleitung von Datenverkehr dienen, wobei die Netzwerkvorrichtung ein Weiterleiten von Datenverkehr zwischen den Netzwerkelementen verwaltet, und wobei die Netzwerkelemente Flusstabellen zum Weiterleiten des Datenverkehrs enthalten, wobei die Netzwerkvorrichtung **dadurch gekennzeichnet ist, dass** sie Folgendes umfasst:
einen Prozessor (1042) und ein nicht-transitorisches maschinenlesbares Speichermedium (1048), das Anweisungen enthält, die, wenn sie durch den Prozessor ausgeführt werden, veranlassen, dass der Prozessor:
Flusstabellen für eine Menge von Netzwerkelementen zu einer kombinierten Tabelle kombiniert, wobei jede Zeile in der kombinierten Tabelle aus einem gemeinsamen Feld jeder Flusstabelle generiert ist,
eine Menge von Spalten der kombinierten Tabelle zum Komprimieren auswählt, wobei die Auswahl wenigstens teilweise auf einer Topologie der Menge von Netzwerkelementen in dem Netzwerk basiert, und
die Menge von Spalten der kombinierten Tabelle in eine Menge von komprimierten Einträgen und eine Menge von Klassifikations- und Regressionsbäumen (CaRTs) komprimiert,
wobei das Komprimieren ein Aufteilen der Menge von Spalten der kombinierten Tabelle in eine vorhersagende Teilmenge und eine vorhergesagte Teilmenge einschließt, wobei die Menge von komprimierten Einträgen die vorhersagende Teilmenge, jedoch nicht die vorhergesagte Teilmenge enthält, wobei auf eine Anfrage nach einer Entität in der vorhergesagten Teilmenge, eine Entität in der vorhersagenden Teilmenge und ein entsprechender CaRT verwendet werden, um die Entität in der vorhergesagten Teilmenge wiederherzustellen.

10. Netzwerkvorrichtung nach Anspruch 9, wobei die Netzwerkvorrichtung ferner die Flusstabellen von der Menge von Netzwerkelementen des SDN-Systems vor dem Kombinieren der Flusstabellen sammeln soll.

11. Netzwerkvorrichtung nach Anspruch 9, wobei jeder Eintrag in der kombinierten Tabelle aus einer Entität übereinstimmender Felder jeder Flusstabelle generiert werden soll.

12. Netzwerkvorrichtung nach Anspruch 9, wobei ein Auswählen einer Menge von Spalten der kombinierten Tabelle zum Komprimieren einschließt, dass die Netzwerkvorrichtung:
die kombinierte Tabelle in eine Anzahl von Gruppen einteilt, wobei jede Gruppe Einträge von Flusstabellen aus einer Teilmenge der Netzwerkelemente enthält, die sich ein gemeinsames Eintritts- und Austrittspaar teilen, und
jede Gruppe bei einer Wahrscheinlichkeit abtastet, die proportional ist zu einer Anzahl von Einträgen jeder Gruppe verglichen mit einer Gesamtzahl von Einträgen in die Anzahl der Gruppen.

13. Netzwerkvorrichtung nach Anspruch 9, wobei ein Komprimieren der Menge von Spalten der kombinierten Tabelle in die Menge von komprimierten Einträgen einschließt, dass die Netzwerkvorrichtung:
eine Teilmenge von ausgewählten Spalten der kombinierten Tabelle als die vorhersagende Teilmenge auswählt,
Kosten vergleicht, für
ein Erhalten der Teilmenge der ausgewählten Spalten in der vorhersagenden Gruppe und
ein Wiederherstellen der Teilmenge der ausgewählten Spalten, falls die Teilmenge sich in der vorhergesagten Teilmenge befindet, wobei eine Kostenberechnung auf einem vorbestimmten Kriterium basiert, und
die Teilmenge der ausgewählten Spalten aus der vorhersagenden Teilmenge entfernt, beim Bestimmten, dass ein Kostenvorteil beim Erhalten der Teilmenge in der vorhersagenden Teilmenge geringer ist als ein vorbestimmter Schwellenwert unter Berücksichtigung von Kosten zur Wiederherstellung der Teilmenge.

14. Netzwerkvorrichtung nach Anspruch 9, wobei ein Komprimieren der Menge von Spalten der kombinierten Tabelle in die Menge von komprimierten Einträgen einschließt, dass die Netzwerkvorrichtung:
eine Spalte in der vorhersagenden Teilmenge mit einer Spalte in der vorhergesagten Teilmenge austauscht, beim Bestimmen, dass Kosten zum Erhalten der resultierenden neuen vorhersagenden Teilmenge und Wiederherstellen der resultierenden vorhergesagten Teilmenge geringer sind als Kosten vor dem Austausch und ansonsten keinen Austausch durchführt, falls die Vorgänge weniger oft als eine vorbestimmte Anzahl von Malen durchgeführt werden, wobei die beiden Spalten basierend auf einer Pfadgemeinsamkeit der weiterleitenden Elemente, die den Teilmengen entsprechen, ausgewählt werden.

15. Nichttransitorisches maschinenlesbares Medium, das darauf gespeicherte Anweisungen aufweist, die, wenn sie von einem Prozessor ausgeführt werden, veranlassen, dass der Prozessor Vorgänge an einer Netzwerkvorrichtung eines software-definierten Netzwerk(SDN)-Systems durchführt, wobei das SDN-System Netzwerkelemente enthält, die als weiterleitende Elemente zum Weiterleiten von Datenverkehr dienen, wobei die Netzwerkvorrichtung ein Weiterleiten von Datenverkehr zwischen den Netzwerkelementen verwaltet, und wobei die Netzwerkelemente Flusstabellen zum Weiterleiten von Datenverkehr enthalten, wobei die Vorgänge **dadurch gekennzeichnet sind, dass** sie Folgendes umfassen:
Kombinieren (604) von Flusstabellen für eine Menge der Netzwerkelemente zu einer kombinierten Tabelle, wobei jede Reihe in der kombinierten Tabelle aus einem gemeinsamen Feld jeder Flusstabelle generiert ist;
Auswählen (606) einer Menge von Spalten der kombinierten Tabelle zum Komprimieren, wobei die Auswahl wenigstens teilweise auf einer Topologie der Menge von Netzwerkelementen in dem Netzwerk basiert; und
Komprimieren (608) der Menge von Spalten der kombinierten Tabelle in eine Menge von komprimierten Einträgen und eine Menge von Klassifikations- und Regressionsbäumen (CaRTs), wobei das Komprimieren ein Einteilen der Menge von Spalten der kombinierten Tabelle in eine vorhersagende Teilmenge und eine vorhergesagte Teilmenge einschließt, wobei die Menge von komprimierten Einträgen die vorhersagende Teilmenge, jedoch nicht die vorhergesagte Teilmenge enthält, wobei auf eine Anfrage nach einer Entität in der vorhergesagten Teilmenge, eine Entität in der vorhersagenden Teilmenge und ein entsprechender CaRT verwendet werden, um die Entität in der vorhergesagten Teilmenge wiederherzustellen.

## Revendications

1. Procédé mis en oeuvre dans un périphérique de réseau d'un système de réseau défini par logiciel (SDN), dans lequel le système SDN contient des éléments de réseau servant d'éléments d'acheminement pour acheminer le trafic, le périphérique de réseau gérant l'acheminement du trafic entre les éléments de réseau, et les éléments de réseau contenant des tables de flux pour l'acheminement du trafic, le procédé étant **caractérisé en ce qu'**il comprend :
la combinaison (604) de tables de flux pour un ensemble d'éléments de réseau en une table combinée, un champ commun de chaque table de flux étant accroché à chaque ligne à l'intérieur de la table combinée ;
la sélection (606) d'un ensemble de colonnes de la table combinée pour la compression, la sélection étant basée au moins partiellement sur la topologie de l'ensemble des éléments de réseau au sein du réseau ; et
la compression (608) de l'ensemble de colonnes de la table combinée en un ensemble d'entrées comprimées et un ensemble d'arbres de classification et de régression (CaRT), la compression comprenant la division de l'ensemble de colonnes de la table combinée en un sous-ensemble de prévision et un sous-ensemble prévu, l'ensemble d'entrées comprimées contenant le sous-ensemble de prévision et non le sous-ensemble prévu, lors d'une demande pour une entité à l'intérieur d'un sous-ensemble prévu, une entité à l'intérieur du sous-ensemble de prévision et un CaRT correspondant étant utilisés pour rétablir l'entité à l'intérieur du sous-ensemble prévu.

2. Procédé selon la revendication 1, le procédé comprenant en outre :
la collecte (602) des tables de flux à partir de l'ensemble des éléments de réseau du système SDN avant de combiner les tables de flux.

3. Procédé selon la revendication 1, dans lequel une entité de champ correspondante de chaque table de flux est accrochée à chaque entrée à l'intérieur de la table combinée.

4. Procédé selon la revendication 1, dans lequel la sélection de l'ensemble de colonnes de la table combinée pour la compression comprend :
la division (704) de la table combinée en un certain nombre de groupes, chaque groupe contenant des entrées de tables de flux provenant d'un sous-ensemble d'éléments de réseau partageant une paire commune d'entrée et de sortie ; et l'échantillonnage (706) de chaque groupe selon une probabilité proportionnelle à un nombre d'entrées de chaque groupe par comparaison à un nombre total d'entrées dans le nombre de groupes.

5. Procédé selon la revendication 1, dans lequel la compression de l'ensemble de colonnes de la table combinée en un ensemble d'entrées comprimées comprend :
la sélection (802) d'un sous-ensemble de colonnes sélectionnées de la table combinée au sein du sous-ensemble de prévision ;
la comparaison (804) des coûts pour
maintenir le sous-ensemble de colonnes sélectionnées dans le sous-ensemble de prévision et
rétablir le sous-ensemble de colonnes sélectionnées si le sous-ensemble est dans le sous-ensemble prévu, le calcul des coûts étant basé sur un critère prédéfini ;
et la suppression (806) du sous-ensemble de colonnes sélectionnées du sous-ensemble de prévision lorsqu'il est déterminé que l'avantage financier que présente le maintien du sous-ensemble dans le sous-ensemble de prévision est inférieur à un seuil prédéfini étant donné les coûts de rétablissement du sous-ensemble.

6. Procédé selon la revendication 1, dans lequel la compression de l'ensemble de colonnes de la table combinée en un ensemble d'entrées comprimées comprend : la permutation (810) d'une colonne à l'intérieur du sous-ensemble de prévision avec une colonne à l'intérieur du sous-ensemble prévu lorsqu'il est déterminé que les coûts de maintien du nouveau sous-ensemble de prévision en résultant et de rétablissement du sous-ensemble prévu en résultant sont inférieurs aux coûts antérieurs à la permutation, laquelle n'est pas réalisée en cas contraire, et si ces opérations ont été effectuées moins d'un nombre de fois prédéfini, les deux colonnes étant sélectionnées sur la base d'une similitude dans le chemin des éléments d'acheminement correspondant aux sous-ensembles.

7. Procédé selon la revendication 6, dans lequel la permutation est renouvelée un nombre de fois prédéterminé pour différentes paires de colonnes.

8. Procédé selon la revendication 1, dans lequel le périphérique de réseau est un contrôleur du système SDN.

9. Périphérique de réseau couplé à un système de réseau défini par logiciel (SDN), dans lequel le système SDN contient des éléments de réseau servant d'éléments d'acheminement pour acheminer le trafic, le périphérique de réseau gérant l'acheminement du trafic entre les éléments de réseau, et les éléments de réseau contenant des tables de flux pour l'acheminement du trafic, le périphérique de réseau étant **caractérisé en ce qu'**il comprend :
un processeur (1042) et un support de stockage non transitoire pouvant être lu par une machine (1048) contenant des instructions, qui, lorsqu'elles sont exécutées par le processeur, amènent le processeur à :
combiner des tables de flux pour un ensemble d'éléments de réseau en une table combinée, un champ commun de chaque table de flux étant accroché à chaque ligne à l'intérieur de la table combinée,
sélectionner un ensemble de colonnes de la table combinée pour la compression, la sélection étant basée au moins partiellement sur la topologie de l'ensemble des éléments de réseau au sein du réseau ; et
comprimer l'ensemble de colonnes de la table combinée en un ensemble d'entrées comprimées et un ensemble d'arbres de classification et de régression (CaRT), la compression comprenant la division de l'ensemble de colonnes de la table combinée en un sous-ensemble de prévision et un sous-ensemble prévu, l'ensemble d'entrées comprimées contenant le sous-ensemble de prévision et non le sous-ensemble prévu, lors d'une demande pour une entité à l'intérieur d'un sous-ensemble prévu, une entité à l'intérieur d'un sous-ensemble de prévision et un CaRT correspondant étant utilisés pour rétablir l'entité à l'intérieur du sous-ensemble prévu.

10. Périphérique de réseau selon la revendication 9, le périphérique de réseau devant en outre collecter les tables de flux à partir de l'ensemble des éléments de réseau du système SDN avant de combiner les tables de flux.

11. Périphérique de réseau selon la revendication 9, dans lequel une entité de champ correspondante de chaque table de flux est accrochée à chaque entrée à l'intérieur de la table combinée.

12. Périphérique de réseau selon la revendication 9, dans lequel la sélection de l'ensemble de colonnes de la table combinée pour la compression comprend le fait que le périphérique de réseau doit : diviser la table combinée en un certain nombre de groupes, chaque groupe contenant des entrées de tables de flux provenant d'un sous-ensemble d'éléments de réseau partageant une paire commune d'entrée et de sortie, et échantillonner chaque groupe selon une probabilité proportionnelle à un nombre d'entrées de chaque groupe par comparaison à un nombre total d'entrées dans le nombre de groupes.

13. Périphérique de réseau selon la revendication 9, dans lequel la compression de l'ensemble de colonnes de la table combinée en un ensemble d'entrées comprimées comprend le fait que le périphérique de réseau doit :
sélectionner un sous-ensemble de colonnes sélectionnées de la table combinée à l'intérieur du sous-ensemble de prévision, comparer les coûts pour
maintenir le sous-ensemble de colonnes sélectionnées dans le sous-ensemble de prévision et
rétablir le sous-ensemble de colonnes sélectionnées si le sous-ensemble est dans le sous-ensemble prévu, le calcul des coûts étant basé sur un critère prédéfini, et
supprimer le sous-ensemble de colonnes sélectionnées du sous-ensemble de prévision lorsqu'il est déterminé que l'avantage financier que présente le maintien du sous-ensemble dans le sous-ensemble de prévision est inférieur à un seuil prédéfini étant donné les coûts de rétablissement du sous-ensemble.

14. Périphérique de réseau selon la revendication 9, dans lequel la compression de l'ensemble de colonnes de la table combinée en un ensemble d'entrées comprimées comprend le fait que le périphérique de réseau doit :
permuter une colonne à l'intérieur du sous-ensemble de prévision avec une colonne à l'intérieur du sous-ensemble prévu lorsqu'il est déterminé que les coûts de maintien du nouveau sous-ensemble de prévision en résultant et de rétablissement du sous-ensemble prévu en résultant sont inférieurs aux coûts antérieurs à la permutation, laquelle n'est pas réalisée en cas contraire, et si les opérations ont été effectuées moins d'un nombre de fois prédéfini, les deux colonnes étant sélectionnées sur la base d'une similitude dans le chemin des éléments d'acheminement correspondant aux sous-ensembles.

15. Support non transitoire lisible par machine sur lequel sont stockées des instructions qui, lorsqu'elles sont exécutées par un processeur, amènent le processeur à effectuer des opérations sur un périphérique de réseau d'un système de réseau défini par logiciel (SDN), dans lequel le système SDN contient des éléments de réseau servant d'éléments d'acheminement pour acheminer le trafic, le périphérique de réseau gérant l'acheminement du trafic entre les éléments de réseau, et les éléments de
réseau contenant des tables de flux pour l'acheminement du trafic, les opérations étant **caractérisées en ce qu'**elles comprennent :
la combinaison (604) de tables de flux pour un ensemble d'éléments de réseau en une table combinée, un champ commun de chaque table de flux étant accroché à chaque ligne à l'intérieur de la table combinée ;
la sélection (606) d'un ensemble de colonnes de la table combinée pour la compression, la sélection étant basée au moins partiellement sur la topologie de l'ensemble des éléments de réseau au sein du réseau ; et
la compression (608) de l'ensemble de colonnes de la table combinée en un ensemble d'entrées comprimées et un ensemble d'arbres de classification et de régression (CaRT), la compression comprenant la division de l'ensemble de colonnes de la table combinée en un sous-ensemble de prévision et un sous-ensemble prévu, l'ensemble d'entrées comprimées contenant le sous-ensemble de prévision et non le sous-ensemble prévu, lors d'une demande pour une entité à l'intérieur d'un sous-ensemble prévu, une entité à l'intérieur du sous-ensemble de prévision et un CaRT correspondant étant utilisés pour rétablir l'entité à l'intérieur du sous-ensemble prévu.
